# EUROPÄISCHE PATENTANMELDUNG

(11) **EP 1 575 154 A1**
(43) Veröffentlichungstag der Anmeldung: **14.09.2005**
(21) Anmeldenummer: 04005465.2
(22) Anmeldetag: 08.03.2004
(51) Int. Cl.: H02M 5/27

(54) **Turbosatz**

(71) Anmelder: SIEMENS AKTIENGESELLSCHAFT, 80333 München (DE)
(72) Erfinder: Heine, Werner-Holger, 46487 Wesel (DE)

(57) **Zusammenfassung**

Die Erfindung betrifft einen Turbosatz (1) mit einer Dampfturbine (2), einem mit der Dampfturbine (2) gekoppelten Generator (3) und einem Frequenz-Umrichter (4) zum Umwandeln von einem Wechselstrom beliebiger Frequenz in einen Wechselstrom vorgegebener Frequenz, wobei der Frequenz-Umrichter (4) mit einem Ausgang des Generators (3) verbunden ist, an dem der Wechselstrom mit beliebiger Frequenz anliegt, wobei der Turbosatz (1) ausgebildet ist zum Erzeugen einer Ausgangswechselspannung mit konstanter Sollfrequenz, unabhängig von einer Drehzahl der Dampfturbine (2) und des Generators (3), wobei die Drehzahl der Dampfturbine (2) im wesentlichen mehr als 60 Hz beträgt.

## Beschreibung

Die Erfindung betrifft einen Turbosatz mit einer Dampfturbine, einem mit der Dampfturbine gekoppelten Generator und einen Frequenz-Umrichter.

Unter einer Dampfturbine im Sinne der vorliegenden Anmeldung wird jede Turbine oder Teilturbine verstanden, die von einem Arbeitsmedium in Form von Dampf durchströmt wird. Im Unterschied dazu werden Gasturbinen mit Gas und/oder Luft als Arbeitsmedium durchströmt, das jedoch völlig anderen Temperatur- und Druckbedingungen unterliegt als der Dampf bei einer Dampfturbine. Im Gegensatz zu Gasturbinen weist bei Dampfturbinen z.B. das einer Teilturbine zuströmende Arbeitsmedium mit der höchsten Temperatur gleichzeitig den höchsten Druck auf.

Eine Dampfturbine umfasst üblicherweise einen mit Schaufeln besetzten drehbar gelagerten Rotor, der innerhalb eines Gehäusemantels angeordnet ist. Bei Durchströmung des vom Gehäusemantel gebildeten Innenraums des Strömungsraums mit erhitztem und unter Druck stehendem Dampf wird der Rotor über die Schaufeln durch den Dampf in Drehung versetzt. Die Schaufeln des Rotors werden auch als Laufschaufeln bezeichnet. Am Gehäusemantel sind darüber hinaus üblicherweise stationäre Leitschaufeln aufgehängt, welche in die Zwischenräume der Rotorschaufeln greifen.

Unter einem Generator im Sinne der vorliegenden Anmeldung wird jeder Generator oder jede elektrische Rotationsmaschine verstanden, die einen Läufer und einen Stator aufweist. Der Läufer weist eine Feldwicklung auf, die mittels eines Erregerstroms ein magnetisches Feld hervorruft. Der Erregerstrom wird üblicherweise über Schleifringe und Kohlebürsten zugeführt. Der Stator weist in der Regel eine Statorwicklung auf. Die Statorwicklung ist derart ausgebildet, dass eine Drehung des Läufers, die ein rotierendes Magnetfeld hervorruft, in der Ständerwicklung eine Spannung induziert. Die dabei entstehende Spannung ist eine Wechselspannung, die für die Energieversorgung zur Verfügung steht.

Der Läufer des Generators bzw. der elektrischen Rotationsmaschine wird in der Regel direkt mit der Dampfturbine gekoppelt. Die Frequenz des Rotors der Dampfturbine und des Läufers des Generators ist wegen der starren Verbindung gleich. In der kommunalen Energieversorgung, bei der solche Anordnungen, bestehend aus einer Dampfturbine und einem Generator, eingesetzt werden, betragen die Drehzahlen 3000 U/min bzw. 3600 U/min. Dies entspricht einer Frequenz von 50 Hz bzw. 60 Hz. In einigen Kraftwerksanlagen wird zusätzlich zur Dampfturbine auch eine Gasturbine starr mit dem Generator verbunden, so dass der Antrieb des Läufers durch die Drehbewegung der Dampfturbine und der Gasturbine hervorgerufen wird.

Es sind Kraftwerksanlagen bekannt, bei denen zwischen der Dampfturbine und dem Generator ein Getriebe angeordnet ist. Bei dem Einsatz einer Dampfturbine in einer Kernkraftwerks-Anlage liegen die Frequenzen des Rotors bei 1500 U/min oder 1800 U/min. Dies sind genau die halben Umdrehungszahlen der sonst eingesetzten Umdrehungen von 3000 U/min oder von 3600 U/min. Deswegen wird der Einsatz von 1500 U/min bzw. 1800 U/min als halbtouriger Betrieb bezeichnet.

Für Anwendungen in dem Bereich des Bahnbetriebes werden Frequenzen von 16 2/3 Hz benötigt.

Bei der Entwicklung und Dimensionierung von Dampfturbinen, Gasturbinen und Generatoren wurde bislang immer die Drehzahl als feste Größe berücksichtigt. Die Auslegung der Rotorschaufelblätter, Rotordurchmesser, Generatorläufergröße, Gehäusegröße, musste auf die definierte Drehzahl abgestimmt werden.

In der Regel ist die Dampfturbine starr mit dem Generator verbunden. Grundsätzlich besteht die Möglichkeit, dass die Dampfturbine über ein Getriebe mit dem Generator verbunden wird. Daher kann eine Dampfturbine entwickelt werden, die z.B. bei höheren Drehzahlen betrieben werden kann. Über ein gemeinsames Getriebe zwischen einer Dampfturbine und einem Generator kann die Frequenz der Dampfturbine an eine Sollfrequenz des Generators angepasst werden. Allerdings entstehen durch den Einsatz eines Getriebes Nachteile, die sich in Form von Wirkungsgradverlusten bemerkbar machen.

Aufgabe der vorliegenden Erfindung ist es, einen Turbosatz, der im wesentlichen eine Dampfturbine und einen Generator umfasst, anzugeben, wobei der Turbosatz kompakt ausgebildet ist.

Die Aufgabe wird durch einen Turbosatz mit einer Dampfturbine, einem mit der Dampfturbine gekoppelten Generator und einem Frequenz-Umrichter zum Umwandeln von einem Wechselstrom beliebiger Frequenz in einen Wechselstrom vorgegebener Frequenz, wobei der Frequenz-Umrichter mit einem Ausgang des Generators verbunden ist, an dem der Wechselstrom mit beliebiger Frequenz anliegt, wobei der Turbosatz ausgebildet ist zum Erzeugen einer Ausgangswechselspannung mit konstanter Sollfrequenz, unabhängig von einer Drehzahl der Dampfturbine und des Generators, wobei die Drehzahl der Dampfturbine im wesentlichen mehr als 60 Hz beträgt, gelöst.

Der Vorteil der Erfindung liegt insbesondere darin, dass nun die Möglichkeit geschaffen wird, durch den Betrieb eines Turbosatzes und dadurch insbesondere einer Dampfturbine bei höheren Frequenzen die Dampfturbine wesentlich kompakter und kostengünstiger auszubilden. Diese Drehzahl des Turbosatzes wurde bislang immer als konstante Größe vorgegeben. Durch den Einsatz eines Frequenz-Umrichters am Ausgang des Generators, wird die Möglichkeit geschaffen, einen Wechselstrom beliebiger Frequenz in einen Wechselstrom vorgegebener Frequenz umzuwandeln. Dadurch kann die an den Generator angekoppelte Dampfturbine für höhere Drehzahlen ausgelegt werden.

Da bislang Komponenten für Dampfturbinen für den Einsatz bei 50 Hz bzw. 60 Hz in der Regel entwickelt wurden, wird nun eine Möglichkeit geschaffen, Komponenten nicht mehr gezielt für zwei Frequenzen (50 Hz oder 60 Hz) auslegen zu müssen.
Dadurch wird eine höhere Standardisierung erreicht.

In einer vorteilhaften Ausgestaltung wird die Dampfturbine und der Generator direkt miteinander gekoppelt. Dadurch wird die Möglichkeit geschaffen, ein Getriebe einzusparen, das unter Umständen eingesetzt wird, wenn die Dampfturbine und der Generator für verschiedene Frequenzen ausgelegt werden. Da bei einem Einsatz eines Getriebes naturgemäß Verluste entstehen, wirkt sich dies negativ auf den Wirkungsgrad des gesamten Turbosatzes aus.

In einer weiteren vorteilhaften Ausgestaltung wird der Turbosatz für Ausgangsleistungen von über 100 MW ausgebildet. Dadurch wird die Möglichkeit geschaffen, für die Kommunalversorgung gezielt ein Produktspektrum anzubieten, das häufig verwendet wird.

Vorteilhafter Weise wird die bisher mit Stahl-Laufschaufeln ausgestattete Dampfturbine mit Laufschaufeln aus dem Werkstoff Titan ausgebildet. Bisher war dieser Materialwechsel bezogen auf die Drehzahl nicht notwendig. Eine Erhöhung der Drehzahl führt zu erhöhten Fliehkräften in den rotierenden Laufschaufeln. Diese Fliehkräfte sind proportional abhängig zu der Masse der Laufschaufeln. Eine geringere Masse der Laufschaufeln führt zu geringeren Fliehkräften und dadurch zu geringeren Beanspruchungen des Rotors.

Zweckdienlicherweise wird der Frequenz-Umrichter ebenso für Leistungen von über 100 MW ausgebildet.

Anhand der Beschreibung und der Figuren werden Ausführungsbeispiele der Erfindung beschrieben. Dabei haben mit denselben Bezugszeichen versehene Komponenten diegleiche Funktionsweise.

Dabei zeigen:
- Figur 1: Schematische Darstellung eines Turbosatzes
- Figur 2: Schematische Darstellung eines Turbosatzes in alternativer Ausführungsform.

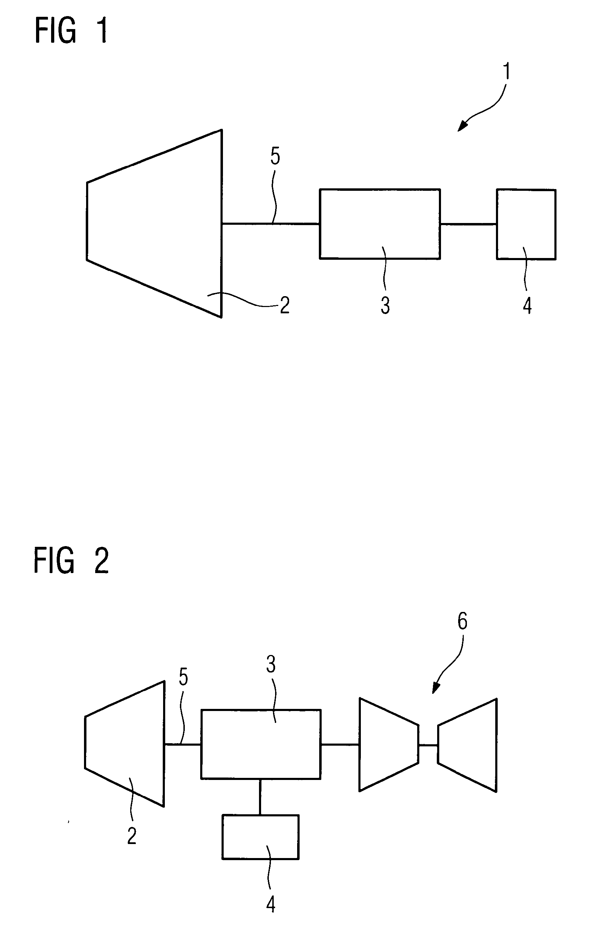

In Figur 1 ist ein Turbosatz 1 mit einer Dampfturbine 2, mit einem Generator 3 und mit einem Frequenz-Umrichter 4 dargestellt. Die Dampfturbine 2 ist über eine gemeinsame Welle 5 mit dem Generator 3 verbunden. Der Frequenz-Umrichter 4 ist ausgebildet zum Umwandeln von einem Wechselstrom beliebiger Frequenz in einen Wechselstrom vorgegebener Frequenz. Der Frequenz-Umrichter 4 wird hierbei vorteilhafterweise für Leistungen von über 100 MW ausgebildet. Die Dampfturbine 2 weist nicht näher dargestellte Laufschaufeln und Leitschaufel auf, die von einem Strömungsmedium durchströmt werden. Durch den Druckabbau des Strömungsmediums in der Dampfturbine 2 wird ein nicht näher dargestellter Rotor, an dem die Laufschaufeln angebracht sind, in Rotation versetzt. Diese Rotation wird über die Welle 5 an einen Generator 3 weitergeführt.

In der Regel beträgt die Frequenz der Rotation der Welle 5 50 Hz bzw. 60 Hz. Die Dampfturbine 2 und der Generator 3 sind nun für höhere Drehzahlen ausgelegt. Die Drehzahl der Dampfturbine 2 liegt dabei im wesentlichen bei mehr als 60 Hz. Wird diese Drehzahl direkt über die Welle 5 an den Generator 3 übertragen, d.h. liegt eine starre Kopplung zwischen der Dampfturbine 2 und dem Generator 3 vor, so wird auch eine Wechselspannung an einem Ausgang des Generators 3 bei höheren Frequenzen, die als beliebige Frequenzen bezeichnet werden können, erzeugt. Daher wird ein Frequenz-Umrichter 4 mit einem Ausgang des Generators 3 verbunden, an dem der Wechselstrom mit beliebiger Frequenz anliegt.

In einer nicht näher dargestellten Ausführungsform kann zwischen der Dampfturbine 2 und dem Generator 3 ein Getriebe eingesetzt werden. Dadurch wird die Möglichkeit geschaffen, die Dampfturbine 2 bei noch höheren Drehzahlen einzusetzen. Mit dem Getriebe kann die hohe Drehzahl der Dampfturbine 2 auf eine niedrigere Drehzahl, die auf den Generator 3 übertragen wird, verringert werden.

Der Turbosatz 1 wird im wesentlichen für Leistungen von über 100 MW ausgebildet. Da die Dampfturbine 2 für höhere Frequenzen von mehr als 60Hz ausgelegt ist, wird dadurch die Möglichkeit geschaffen, die Dampfturbine kompakter und dadurch kostengünstiger zu realisieren. Insbesondere ist es nun möglich, die Anzahl an Laufschaufel- bzw. Leitschaufelreihen (Stufenzahl) zu reduzieren. Dadurch reduzieren sich die Abmessungen der Dampfturbine, die Abmessungen werden insgesamt dadurch kleiner.

In einer vorteilhaften Ausgestaltung werden Werkstoffe aus leichtem Material in der Dampfturbine 2, insbesondere für die Laufschaufeln in einer Niederdruckstufe, eingesetzt. Vorzugsweise werden als leichte Materialien Titan oder auch Verbundwerkstoffe eingesetzt.

In der Figur 2 ist eine alternative Ausführungsform eines Turbosatzes 1 dargestellt. Eine Dampfturbine 2 ist mit einem Generator 3 über eine Welle 5 miteinander verbunden. Am Ausgang des Generators 3 ist ein Frequenz-Umrichter 4 angekoppelt. Der Generator 3 wird zusätzlich zur Dampfturbine 2 mit einer Gasturbine 6 betrieben. Die Drehzahl der Gasturbine 6 kann ebenso bei höheren Drehzahlen von mehr als 60Hz liegen wie die Dampfturbine 2, indem die Verbindung zwischen dem Generator 3 und der Gasturbine 6 starr gewählt wird. Die Drehzahl der Gasturbine 6 und des Generators 3 kann aber auch unterschiedlich sein, indem man ein nicht näher dargestelltes Getriebe zwischen dem Generator 3 und der Gastrubine 6 einsetzt.

## Patentansprüche

1. Turbosätz (1) mit einer Dampfturbine (2),
einem mit der Dampfturbine (2) gekoppelten Generator (3) und einem Frequenz-Umrichter (4) zum Umwandeln von einem Wechselstrom beliebiger Frequenz in einen Wechselstrom vorgegebener Frequenz,
wobei der Frequenz-Umrichter (4) mit einem Ausgang des Generators (3) verbunden ist, an dem der Wechselstrom beliebiger Frequenz anliegt,
wobei der mit der beliebigen Frequenz betriebene Turbosatz (1) ausgebildet ist zum Erzeugen einer Ausgangswechselspannung mit konstanter Sollfrequenz, unabhängig von einer Drehzahl der Dampfturbine (2) und des Generators (3),
wobei die Dampfturbine (2) für eine Drehzahl von im wesentlichen mehr als 60 Hz ausgebildet ist.

2. Turbosatz (1) nach Anspruch 1,
wobei die Dampfturbine (2) und der Generator (3) direkt gekoppelt sind.

3. Turbosatz (1) nach Anspruch 1 oder 2,
wobei der Turbosatz (1) für Ausgangsleistungen von im wesentlichen über 100 MW ausgebildet ist.

4. Turbosatz (1) nach Anspruch 1, 2 oder 3,
wobei die Dampfturbine (2) Laufschaufeln aus dem Werkstoff Titan aufweist.

5. Turbosatz (1) nach einem der Ansprüche 1 bis 4,
wobei der Frequenz-Umrichter (4) für einen Einsatz bei Leistungen von über 100 MW ausgebildet ist.
